# EUROPEAN PATENT APPLICATION

(11) **EP 1 619 629 A1**
(43) Date of publication of application: **25.01.2006**
(21) Application number: 04405676.0
(22) Date of filing: 04.11.2004
(51) Int. Cl.: G07B 15/02, G07F 19/00

(54) **Pager device and system for parking payment charges**

(30) Priority: 21.07.2004 AE 2004261; 23.08.2004 WO PCT/IB20/04002746
(71) Applicant: Al Amri, Moosa Eisa, Dubai (AE)
(72) Inventor: Al Amri, Moosa Eisa, Dubai (AE)
(74) Representative: Cronin, Brian Harold John

(57) **Abstract**

A vehicle-portable parking meter device for paying parking charges and for displaying paid parking time comprises a radio-operable two-way pager (304,401) having a display screen (106) and a contact or contactless storage chip. The pager (304,401) can be installed in a vehicle so the screen (106) is visible from outside. The storage chip can be loaded with an amount of credit usable as parking fees and is connectable via a GSM or other radio network (305,306; 404,405) to a payment server (303,403) for paying parking fees by deduction from the amount of credit in the storage chip. The device is arranged for entering an intended parking time and an identification of a parking place, either by manual actuation of the pager (401) or by remote control using a mobile phone (301) so a message corresponding to the intended parking time and parking place is transmitted to the payment server (303,403). The pager's display screen (106) displays paid parking time in correspondence with the intended parking time and with an amount of credit deducted as paid parking fee. Paid parking time is displayed by the display screen (106) in response to a confirmation-of-payment message sent from said payment server (303,403) to the pager (304,401).

## Description

### Field of the invention

The invention relates to a pager device and system for parking payment charges in order to pay the required charges of the vehicle in private or public paying car parks, highway parking, main road parking in charged parking areas, or to pass from different points in highways.

### Background of the invention

The invention relates to the problem of car parking in paying parking areas, especially in the winter or summer season, or when the motorist parking his vehicle is not able to come back again to the vehicle to pay the charges for a further period, especially if he was busy in a business meeting, forgot to pay the required charges, or late to pay a charge for an extended time, and allowing also the possibility to pay a fme for not paying the car parking charges. To avoid the above-mentioned problem, the invention aims to provide easier possibilities for drivers and car owners

Various proposals for parking schemes include the following.

US patent 6,102,285 describes a parking meter system in which a user-operated display device is placed in the car. Payment of the parking charge is made using a pre-paid debit card or by deduction from a pre-purchased amount. The display is illuminated during the parking period. The paid parking period can be checked visually by a parking attendant, or by remote control using a radio frequency transmission.

US patent 6,097,106 discloses a vehicle security system for valet parking where the parking attendant uses a pager to retrieve a parked vehicle.

WO 01/31485 discloses an internet payment system applicable *inter alia* for parking lot payments.

US patent 6,559,776 describes a car parking system where occupancy of specific parking places in a parking lot is controlled by a computer system cooperating with a portable transceiver placed in each parked car, the transceiver having a display and a device for debiting parking charges for example with a debit or credit card.

### Background of storage chips

Storage chips are used in our everyday life in phone cards and other kinds of smart cards, smart cheques, smart boarding pass, smart documents, etc.

### 1 - HYBRID CARDS

Hybrid cards is the term given to e-cards that contain two or more embedded chip technologies such as a contactless smart chip with its antenna, all in a single card. The contactless chip is typically used for applications demanding fast transaction times, like mass transit. The contact chip can be used in applications requiring higher levels of security. The individual electronic components are not connected to each other even though they share space in a single card.

Hybrid cards offer a unique solution for updating existing badging systems. This e-card can accommodate the infrastructure and card technology of a legacy system while adding new applications and e-card technologies, all in a single ID Card.

Select Card Printer Encoders can be provided with an optional e-card docking station containing any combination of up to three different types of e-card encoders. A printer / encoder equipped with all three enables the user to read and /or store information in the memory of three different embedded e-card chips, print on the front and back of the card, and encode either an ISO or JISII magnetic strip, all in a seamless one pass process. In this case, the e-card chips should comply with the specifications of ISO 7816 standard parts 1-4.

### 2 - COMBI CARDS

The Combi Card - also known as a dual-interface card - has one smart chip embedded in the card that can be accessed through either contact pads or an embedded antenna. This form of Smart Card is growing in popularity because it provides ease-of-use and high security in a single card product. Mass transit is expected to be one of the more popular applications for the Combi Card. In the mass transit application, a contact-type acceptor can be used to place a cash value in the chip's memory and the contactless interface can be used to deduct a fare from the card.

Select card printer/encoders are available with an optional e-card docking station containing a contact smart card encoder and / or a contactless smart card encoder. These printer/encoders can be used to read and / or store information in the chip, print on the front and back of the card and encode either an ISO or JISII magnetic stripe, all in a seamless one-pass process.

This discussion of the various types of smart cards is intended to illustrate the prior art, and to clarify the possibilities of using the prior technology in the present invention as a component of the pager device and system for charged parking areas.

### SUMMARY OF THE INVENTION

The invention proposes a vehicle-portable parking meter device for paying parking charges and for displaying paid parking time, comprising a radio-operable pager having a display and a contact or contactless storage chip. The pager is installed or installable in or on a vehicle such that the display is visible from outside the vehicle. The storage chip is loadable by connection with a credit-loading device with an amount of credit usable as parking fees. The storage chip is connectable via a GSM or other radio network to a payment server for paying parking fees by deduction from the amount of credit in the storage chip. The device is arranged for entering an intended parking time and an identification of a parking place where the vehicle is parked. These entries are made either by manual actuation of the pager, for example by the pager having a keyboard for entering data, or by remote control via a radio network typically using the motorist's GSM mobile phone, so the entries result in transmitting a message corresponding to the intended parking time and parking place to the payment server. The display screen is arranged to display paid parking time in correspondence with the intended parking time and with an amount of credit deducted as paid parking fee. Paid parking time is displayed by the display screen in response to a confirmation-of-payment message sent from the payment server to the pager.

The invention also concerns a system for paying parking charges and for displaying paid parking time, comprising a vehicle-portable parking meter device as set out above, and a payment server for paying parking fees by deduction from the amount of credit in the pager's storage chip which is connectable via a GSM or other radio network to the payment server. The payment server usually cooperates with an authentication server. The system is arranged to operate in the same way as set out above for the device. In one arrangement where an intended parking time and an identification of a parking place are entered by manual actuation of the pager keyboard, the confirmation-of-payment message is sent back to the pager along the same route along which it received its message, by a dual-route transmission. In another arrangement where an intended parking time and an identification of a parking place are entered via a radio network using for example a telephone at a location that can be remote from the parked vehicle, the confirmation-of payment message is sent to the pager via another radio network connection.

The invention thus provides a pager device or display unit for use when parking in charged car parking areas, that contains a storage chip with a cash loading capacity to pay the parking charges. On the other hand, this invention makes use of electronic communication methods, including paying the car parking charges, using the pager to pay or with display unit (pre-paid, or through authorization station). Payment can be executed through a mobile phone, normal phone device, or any other communication unit.

The device and system according to the invention combine ease of use and convenience for the motorist, simple management for the issuing authority and for the management authority in charge of the payment server, and reliable control of the parking payments.

In one embodiment, the pager comprises a plurality of function keys enabling the user to actuate different functions on the device including selection of payment methods and display of selected information such as a payment amount. For example, the pager comprises one function key for actuating automatic renewal of a parking period and displaying an extended paid parking time when a paid parking period expires.

The storage chip of the pager also stores control programs for managing functions performed by the pager. These programs will be provided for carrying out all intended functions including those described herein. The programs can be provided or approved by the authority that issues the pager device. The same authority can coordinate the payment server and authorization server and their associated programs and overview the necessary arrangements for transferring the payments to the owners of the parking spaces.

The parking meter also advantageously comprises means for illuminating the display screen that can be actuated by a proximity sensor responsive to a hand passing over the display, for facilitating checking of the display by a parking attendant at night or in poor lighting conditions.

In general, the parking meter device according to the invention can be used in an electronic payment method used by the vehicle driver, owner or others to pay parking charges by stored cash in the pager equipped with contact/contact less card (i.e. combi card or other) through display unit, to pay parking charges from the stored value, pay highway tolls, entrance charges to private areas, etc.

The new pager device will receive messages from a dispatcher station, or an authorized payment server through low bit rate radio frequency communication channel. These messages could be numerical message service NMS or services of another mobile network (GSM/GPRS, SDMA, SDMA 2000), or any other network to display the required time according to the received instruction of the device. Beside, as the first embodiment of the current invention, the pager device includes a number of keys, which allows the motorist to choose the payment order, to be sent through the dispatcher station, payment server, required time order which send an order of the required parking hours, or payments of highway tolls.

The invention relates to a pager, or display unit having a program connected with a contact or contactless chip, and working by many ways as:
1. When the motorist wishes to pay car parking charges, he/she will press the key pad of the pager to pay the parking charges for a desired time at an identified parking location, the charge will be processed by the payment server that will send a confirmation-of-payment message to provide a display of the paid parking period on the pager screen, and the motorist will put the display unit or pager in the front of the car behind the front windscreen, which allows a parking attendant or inspector to the check the paid period.
2. If the motorist while being far from his vehicle, wishes to extend the parking period, and is unable to reach his vehicle because of his meetings or professional obligations or otherwise, he can send an order or instruction through his mobile phone, by keying in a chosen parking period and sending the order. After this, the newly-set time will be displayed on his vehicle in the parking area by the pager or display device placed behind the car's windscreen.

### Brief Description of the Drawings

- Figure 1 :: Illustrates an example of a pager device according to the invention with keypad, display monitor and solar battery recharging unit.
- Figure 2 :: Illustrates a pager device like that shown in Fig. 1 but without a solar-powered recharging system.
- Figure 3 :: Illustrates a diagram of one example of connecting the pager of the invention to a payment server via a communications network.
- Figure 4 :: Illustrates a diagram of another example of connecting the pager of the invention to a payment server this time via a dual-route communications network.

### Detailed Description

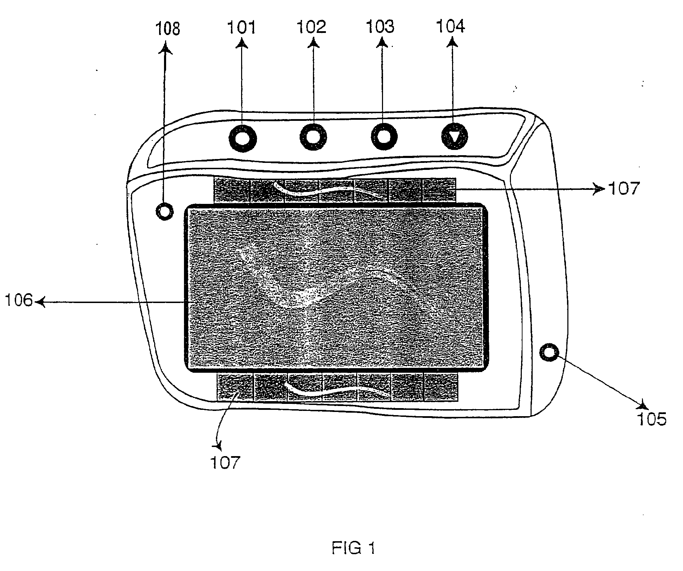

The invention relates to an automatic pager device designed to pay and display the paid amount charged for parking cars in car parking areas, with a display unit to display the paid amount (Fig.1).

Figure 1 illustrates a pager device with key pad, which including menu, choose and send functions 141,102 & 103, a spare-function key 104, display monitor 106, battery recharging unit working by solar recharging system 107, charger cable terminal 105 to charge the battery, and an integrated internal storage chip (not shown).

The pager device is preferably also equipped with a proximity-sensor that switches on a screen illumination for the display monitor 106 in response to passing a hand over the pager, for instance by a parking inspector passing his hand in front the car windscreen over the pager, to check the displayed paid parking time at night or in poor lighting conditions.

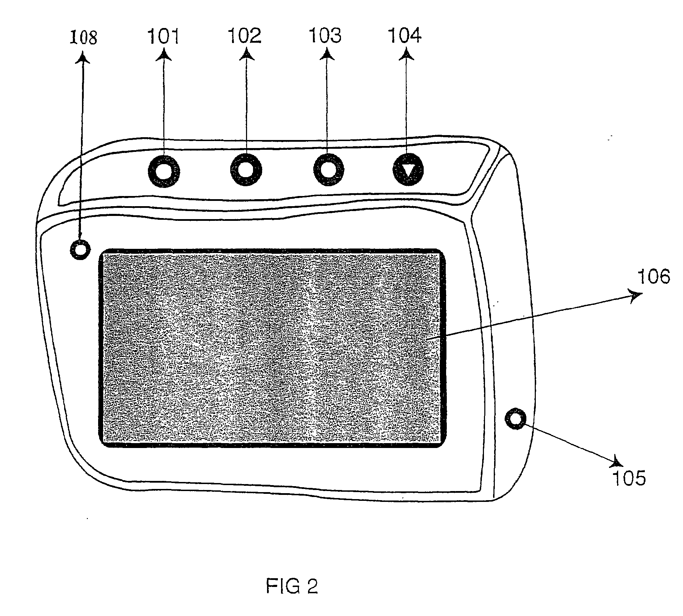

Figure 2 illustrates a pager device as shown in Fig. 1 without a solar recharger.

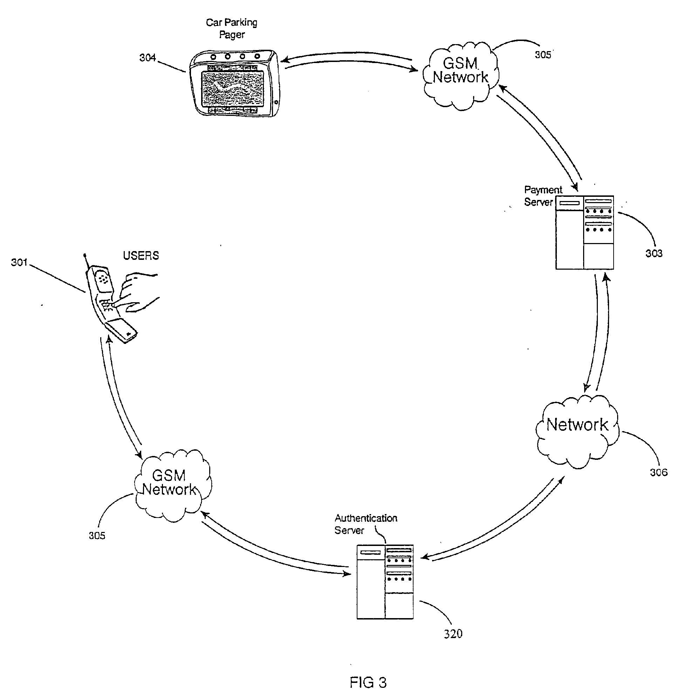

Figure 3 illustrates a diagram of the payment server, using a mobile phone 301, connectable to GSM or any other network 305 connectable to an authorization/authentication server 302, connectable to a cord / cordless network 306, connectable to a payment server 303, which connects to a GSM or other network 305, connectable to the pager device 304 in the car parking area which charges calculated according to the parking time, and then sends a return signal on the same route, as shown in the diagram of Fig. 3, in the reverse direction until the signal reaches the mobile phone 301 of the caller to confirm the payment and authorize the required parking time or highway toll.

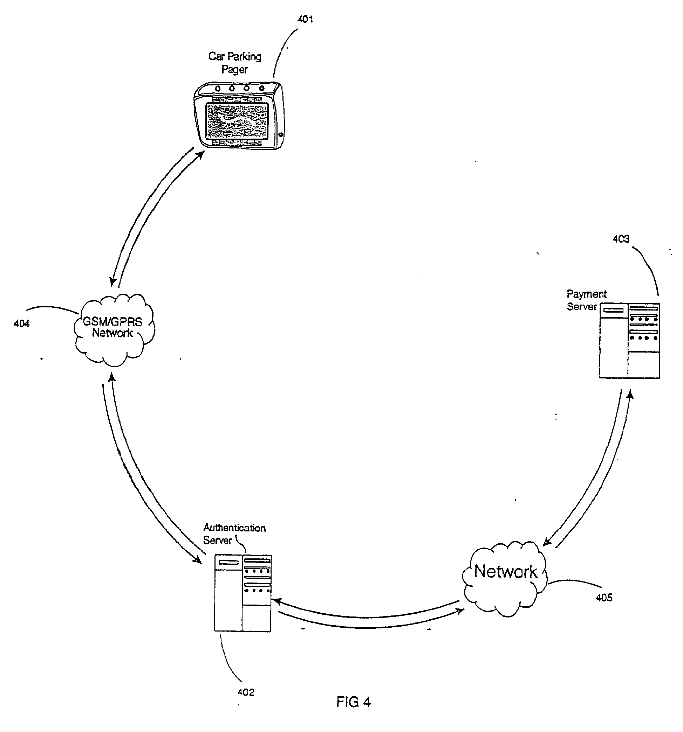

Figure 4 illustrates a diagram of a payment system which uses a dual-route device that is connectable with GSM or GPRS or other network 404, connectable with an authorization server 402 connectable to a cord / cordless network 405, connectable with a payment server 403 which calculates the charges according to the required time and sends a return signal on the same route as shown in Fig. 4 in the reverse direction, until the signal reaches the pager device 401 to confirm the payment has been made and authorizes the required parking time.

### Loading of the Storage Chip

The pager device has a contactless storage chip with a value loading capacity. The loading and reloading of a value in the contactless storage chip is achieved through an authorized loading station whereas the car drivers or owners enter the desired amount whether cash or by credit card or other to add the required amount to the chip of the pager device of the invention, for example by placing the device in the proximity of the loading station which is linked to a payment device.

Another way of the loading a monetary value on the chip is similar to the loading of pre-paid cards on mobile phones, by scratching the covered ply of a secret number on a pre-paid card and loading the value to the mobile phone, using the secret number as a security code. The loading of a value on a pre-paid card to the inventive automatic equipment for paying car parking charges from a mobile phone can be done by entering the device number of the pager device according to the invention, entering the pre-paid card number then pressing on the sending key. The value will be loaded or reloaded according to the nominated system by the loading device.

The pager's contactless storage chip can also be loaded with a monetary value by transfer of a value stored in a mobile phone, e.g. by loading a value from a pre-paid card onto a mobile phone as just described above, and transferring the value to the pager.

### Paying the Car Parking Charges by Hand / Automatic Way

When the motorist knows the exact period that he wishes to leave his car on the car park, he will pay the required car parking charges from the stored value on the pager device of the car parking, by pressing the key 101 which displays on the device screen 106 the expected waiting period for the car or vehicle. The parking charge is then made via a payment server, as explained below, which provides a confirmation-of-payment message whereupon the paid parking time is displayed. Then the device or display unit will be placed in the front side of the car behind the front windscreen or in any other place nominated by the parking authority to enable the inspectors or in-charge employees to check the device and confirm payment of the car parking charges.

When the car driver or owner expects to park for a given period but knows that he may exceed the paid time, he could press on key 102 for example which initiates a function for automatic renewal of the parking period. By this action, the pager device of the invention will automatically calculate the initial parking time on the parking area. When the previous paid-for period has expired the device will not stop but continue to calculate by adding an extra hour to the calculated period. Each extra charge can be debited automatically from the amount stored on the storage chip, as the charge arises. When the driver or owner returns to the vehicle he stops the calculation of the extra time and parking charges of his car, and at this point the charging will stop.

### Payment by Server

WO 2004/012352 discloses a wireless mobile device used to conduct financial transactions using a contactless smartcard, in particular by combining a contactless card reader with a mobile phone. The financial transactions include face-to-face or remote purchases, payment with electronic cash stored in the contactless card, or payment with a contactless card through a financial institution, and downloading and storing of digital goods or services in the contactless card.

It is noted that WO 2004/012352 discloses a payment mechanism that can be used to implement the parking charging system of this invention. The disclosure of WO 2004/012352 is therefore incorporated herein by way of reference as background for how a car parking pager according to the invention transacts with a payment server and authentication server as similar to mobile user equipped with a contactless card.

### Payment by two-way pager via satellite or payment server

Recent pagers are equipped with a numeric or alphanumeric display. This pager is capable of displaying a message sent by transmitters using a digital code, which contains the text of the message being sent. These paging systems may use a protocol such as the post office code Standardization advisory group (POCSAG) or Golay sequential code (GSC).

Previous paging systems were strictly one-way. There was no confirmation to the sender that a message has not actually reached the pager, nor did the user have any means of sending an answer via his pager.

To remedy this limitation, pagers have been developed which allow two-way communication, which have individual transmission capability. When a base station calls a pager of this type, the pager transmits its ID code to the base station, which is an affirmative response that the pager has received the call.

The invention advantageously implements a 2-way pager with SMS sending/receiving capacity. US Patent No. 6,731,942 discloses such a system that utilizes a communication protocol which allows a dispatcher station and a pager of the paging system to communicate over the GSM/GPRS network in a predetermined manner. This patent discloses how a pager can transmit a message to payment server or authority to get in return confirmation, which can be used in the implementation of the present invention for the confirmation of parking payments and times that can be displayed on the pager's screen.

### Detailed Description of the Operation

Fig. 3 illustrates a diagram of the payment server, using a mobile phone 301 that the user connects via GSM or other network 305 to the authorization server 302. The latter is connected via network 306 to the payment server 303, which connects via GSM or other network 305 to the pager device 304 in a car parking area. A message from the pager device 304 can be sent in reverse direction back to the mobile phone 301 to confirming that the sent message has been executed.

### The device of Fig. 3 works as in the following steps:

The motorist using his/her mobile phone 301 enters the number of the car parking pager 304 and the required time for car parking, as well as a code identifying the car parking area if the device is being operated manually, or an automatic identification of the parking area by GPS. This information is transferred to the authorization server 302 via network 305, which calculates the amount to be charged and sends this information to payment server 303 through network 306. The payment server 303 also sends the information to the car parking pager device 304 through network 305. An SMS or NMS confirmation of payment message is sent to the pager 304 to display the authorized period on the pager's screen 106. This payment server 303 receives and transmits the message or order from motorist and subscriber in a short message service (SMS) or numeric message service (NMS) to the motorist's pager 304 via relatively low bit rate radio frequency communication channel or other. To provide the needed confirmation that the motorist's instruction reached the car-parking pager device 304 if the driver is far from the vehicle, the information is sent from the pager 304 via the reverse route as shown in Fig. 3 to deliver this information to the driver via phone (e.g. by an SMS) to confirm the execution of his instruction, and that the required car parking period is displayed on the screen (106).

The motorist's pager 304 is a two-way pager that receives and transmits information from and to the communication system that authorizes and executes payment. Further details of how such a two-way pager system can operate are given in US patent 6,731,942.

Fig. 4 illustrates a diagram of the payment system using a dual-route device for connecting the pager 401, via GSM or GPRS or other network, with the authorization server 402 connected by network 405 with payment server 403 which calculates the charges according to the required time and sends a return signal on the same route as shown in Fig. 4 in reverse direction, until the signal reaches to the pager device 401 to confirms the payment and authorize the required time.

To implement the arrangement of Fig. 4 the pager 401 will be equipped with an alpha-numeric key pad which allows the motorist or vehicle owner or others by pressing the pre-determined keys of the pager display to send a message e.g. by SMS requesting for paid parking permit to the payment server and for confirmation via satellite or GSM/GPRS or another network.

According to this invention the pager for car parking will preferably be equipped with two batteries. One battery will be for powering the memory of time and date and other required information that is programmed by the pager issuing authority. This battery could be connected to the solar-powered device 107 for charging the battery and for powering the pager display unit. Further details of solar-operated recharging are given in EP-A-1,246,340.

EP-A-1,246,340 discloses that a solar-powered device could be disposed on a battery unit of a mobile handset to charge the battery unit. This invention keeping this as a background for charging the battery of pager from solar or other source of light to give long life of the battery.

The second battery of the pager could be a rechargeable battery or a normal lithium battery for example, or another battery for powering illumination of the pager display screen 106 for a parking inspector to check the parking charges. The second battery can also power the function of pager from the keypad to choose and display the requested parking time.

One of the pager keys, e.g. the spare-function key 104, can display the state of battery charging.

### Extra Features and Advantages of the Invention

To promote the sale of goods in shopping malls, according to the invention, the pager could incorporate a function enabling a shopkeeper to take over the parking charges of customers. Thus the shopkeeper by phoning the number of the pager could have the current parking charge transferred to his account. The same applies to visitors of paid parking areas whose parking charges could be paid by a host.

The device of the invention could be used to achieve more advantages by providing more programs with more function keys, for example asking a parking authority for help if anything happened to the vehicle by sending messages to the car parking device authority.

The pager could also send a paging message to the motorist's mobile phone alerting him of expiry of the set parking time, or when a maximum legal parking time has been reached, or when the amount of credit stored in the storage chip is low or depleted, or if the pager batteries are low.

The pager can also have a "ready" setting when it is placed in the vehicle at a visible location, so it will only accept remote payment orders when this "ready" setting is on.

In addition to the payment of parking charges and the display of paid parking time, the pager of this invention can also perform other functions like alerting unauthorized entry into or the theft of the vehicle, as well as the payment of toll charges on highways, bridges or tunnels, etc.

As mentioned, the pager can incorporate or be associated with a GPS device. In this case the GPS device can identify position of the vehicle and hence the parking place where the vehicle is being parked, and automatically provide the necessary identification signal of the parking location.

The payment calculation, based on the identification of the parking place, its parking charges and the intended parking time can be performed by the authentication server (302,402) and/or by the payment server (303,403) and/or can be made at least in part in the parking pager manually (by providing the pager with a function to select parking charges), semi-automatically or automatically (especially when the pager is used with a GPS). The payment calculation will take into account discrepancies between the requested parking time and the chargeable period. For example, if the user requests 3 hours parking up to 10pm, but the parking charges are made only up to 9pm, the software will not accept extra payment for the period from 9pm to 10pm, or could extend the paid parking period to the next charged period for the next day.

## Claims

1. A vehicle-portable parking meter device for paying vehicle parking charges and for displaying paid parking time, comprising:
a radio-operable pager (304,401) having a display screen (106) and a contact or contactless storage chip, the pager (304,401) being installed or installable in or on a vehicle such that the display screen (106) is visible from outside the vehicle;
the storage chip being loadable with an amount of credit usable as parking fees by connection of the storage chip with a credit-loading device;
the storage chip being connectable via a GSM or other radio network (305,306; 404,405) to a payment server (303,403) for paying parking fees by deduction from the amount of credit in the storage chip; and
the device being arranged for entering an intended parking time and an identification of the parking place by manual actuation of the pager (401) or by remote control via a radio network (301,305,306) and for transmitting a message corresponding to the intended parking time and parking place to the payment server (303,403), the display screen (106) being arranged to display paid parking time in correspondence with the intended parking time and with an amount of credit deducted as paid parking fee, paid parking time being displayed by the display screen (106) in response to a confirmation-of-payment message sent from the payment server (303,403) to the pager (304,401).

2. The parking meter device of claim 1, wherein the pager (304,401) comprises a plurality of function keys (101-104) enabling the user to actuate different functions on the device including selection of payment methods and display of selected information such as a payment amount.

3. The parking meter device of claim 2, wherein the pager comprises a function key for actuating automatic renewal of a parking period and displaying an extended paid parking time when a paid parking period expires.

4. The parking meter device of any preceding claim, wherein the pager (304,401) is powered by at least one battery, and comprising a solar-operated battery charging device (107) for charging at least one of the batteries.

5. The parking meter device of any preceding claim, wherein the pager (304, 401) is powered by two batteries, one battery powering time, date and other required functions of the pager, the other battery powering further functions of the pager.

6. The parking meter device of any preceding claim, wherein the storage chip of the pager (304, 401) stores control programs issued for managing functions performed by the pager.

7. The parking meter device of any preceding claim, comprising means for illuminating the display screen responsive to a hand passing over the pager.

8. A system for paying vehicle parking charges and for displaying paid parking time, comprising:
a vehicle-portable parking meter device as claimed in any preceding claim, and
a payment server (303,403) for paying parking fees by deduction from the amount of credit in the pager's storage chip which is connectable via a GSM or other radio network (305,306; 404,405) to the payment server (303,403);
the system being arranged for entering an intended parking time and an identification of a parking place by manual actuation of the pager (401) or by remote control via a radio network (301,305,306) and for transmitting a message corresponding to the intended parking time and parking place to the payment server (303,403), the display screen (106) being arranged to display paid parking time in correspondence with the intended parking time and with an amount of credit deducted as paid parking fee, paid parking time being displayed by the display screen (106) in response to a confirmation-of-payment message sent from the payment server (303,403) to the pager (304,401).

9. The system of claim 8 which is arranged for entering an intended parking time and an identification of a parking place by manual actuation of the pager (401), and wherein the confirmation-of-payment message is sent back to the pager (401) along the same route along which it received its message, by a dual-route transmission.

10. The system of claim 7 or 8 which is arranged for entering an intended parking time and parking place where the vehicle is parked by a telephone (301) via a radio network (305,306), and wherein the confirmation-of-payment message is sent to the pager (304) via another radio network communication (305).
